# EUROPÄISCHE PATENTSCHRIFT

(11) **EP 1 518 073 B1**
(45) Veröffentlichungstag und Bekanntmachung des Hinweises auf die Patenterteilung: **26.04.2006**
(21) Anmeldenummer: 03759895.0
(22) Anmeldetag: 23.05.2003
(51) Int. Cl.: F16P 3/14

(54) **SENSOR**
SENSOR
CAPTEUR

(30) Priorität: 18.06.2002 DE 10227081
(43) Veröffentlichungstag der Anmeldung: 30.03.2005
(73) Patentinhaber: SICK AG, 79183 Waldkirch (DE)
(72) Erfinder: DAGES, Hartmut, 79108 Freiburg (DE)
(74) Vertreter: Ludewigt, Christoph
(86) Internationale Anmeldenummer: PCT/EP2003/005388
(87) Internationale Veröffentlichungsnummer: WO 2003/106884

(56) Entgegenhaltungen:
- EP-A- 0 964 272
- DE-U- 20 117 499
- DE-U- 29 710 308
- US-A- 5 877 695
- US-B1- 6 403 951

## Beschreibung

Die Erfindung betrifft eine berührungslos wirkende Schutzeinrichtung mit einem Sensor gemäß dem Oberbegriff des Anspruchs 1.

Grundsätzlich weisen Sensoren ein Gehäuse zur Aufnahme der Sensorelektronik und der Sensorelemente auf. Weiterhin können die Sensoren auch optische Anzeigeelemente aufweisen. Diese dienen beispielsweise als Statusanzeige des Sensors und werden überwiegend durch Leuchtdioden (LED) realisiert. Diese LED sind von außen sichtbar, indem entweder in der Gehäusewand eine Durchbrechung vorgesehen ist, die gegebenenfalls mit einer Frontscheibe abgedeckt ist und durch die die LED sichtbar ist oder, wie dies beispielsweise in der DE 297 10 308 U1 beschrieben ist, unmittelbar hinter der Gehäusewandung angeordnet, wobei die Gehäusewandung an der Stelle eine verringerte Dicke besitzt, so dass das Licht der LED durch die Gehäusewandung durchscheint. Ein Nachteil hiervon ist, dass in dem Gehäuse zusätzlicher Platzbedarf notwendig ist, der für etwaige Sensorelemente, wie optische Sende- oder Empfangselemente nicht genutzt werden kann. Diese nicht für die eigentliche Sensorfunktion nutzbare Zone wird auch Totzone genannt. Derartige Totzonen verhindern beispielsweise, dass das Schutzfeld eines Lichtgitters, wenn dies auf einen Arbeitstisch montiert ist, lückenlos oberhalb des Arbeitstisches beginnt. Entsprechend der Ausdehnung der Totzonen ist das Schutzfeld von dem Arbeitstisch beabstandet. Ein weiterer Nachteil besteht darin, dass die Einbauverhältnisse für den Sensor in der Maschine oft sehr eng sind, so dass die Anzeigeelemente verdeckt sind oder nur schlecht erkannt werden können.

Aus der US 5,877,695 ist ein Mobiltelefon bekannt, das ein Gehäuse aus einem organischem elektroluminiszierenden Material aufweist, so dass das Gehäuse einen visuellen Alarm geben kann, z.B. bei einem Anruf auf das Mobiltelefon.

Ausgehend von diesem Stand der Technik ist es Aufgabe der Erfindung, eine berührungslos wirkende Schutzeinrichtung mit einem Sensor mit einer verbesserten visuellen Anzeige zu schaffen.

Die Aufgabe wird gelöst durch einen Gegenstand mit den Merkmalen des Anspruchs 1. Die Grundidee der efindungsgemäßen Schutzeinrichtung liegt in einem Sensorgehäuse, das leuchten kann. Das Gehäuse als solches bildet das optische Anzeigeelement, beispielsweise für die unterschiedlichsten Statusanzeigen. Da somit nicht einzelne Anzeigeelemente punktuell auf dem Gehäuse angeordnet sind, sondern das Gehäuse selbst leuchten kann, ist eine deutlich bessere Erkennbarkeit gewährleistet, da das Gehäuse des Sensors aus jeder Richtung erkennbar ist, im Gegensatz zu einzelnen Anzeigeelementen, die nur an einer Seite eines Sensors angeordnet sein können und somit beispielsweise von der anderen Seite des Sensors nicht erkennbar sind.

Da das Gehäuse leuchten kann und die bisher üblichen Anzeigeelemente nicht mehr notwendig sind, können die Totzonen, die aufgrund der bisher notwendigen Anzeigeelemente auftraten, entfallen oder zumindest stark reduziert werden, wodurch sich der Vorteil ergibt, dass beispielsweise im Falle des Lichtgitters, das durch das Lichtgitter definierte Schutzfeld den Abmessungen des Gehäuses entsprechen kann. Durch den Wegfall der Totzonen ist die Sicherheitsfunktion des Lichtgitters, wie das eingangs genannte Beispiel, bei dem ein Schutzfeld aufgrund der Totzonen von einem Arbeitstisch beabstandet ist, zeigt, verbessert. Das Schutzfeld hat gegenüber dem Gehäuse letztlich eine größere Ausdehnung als bisher.

Weiterhin zeichnet sich der erfindungsgemäße Sensor durch ein optisch auffälliges Gehäuse aus, wodurch sich der Vorteil ergibt, dass insbesondere im Sicherheitsbereich, in denen die Sensoren Schutzfelder aufspannen, auch das leuchtende Gehäuse eine visuelle Barriere darstellt. Bedienungspersonen einer zu bedienenden Maschine mit einem durch das Schutzfeld abgesicherten Gefahrenbereich werden dadurch auf die Schutzeinrichtung auch optisch aufmerksam gemacht, so dass beispielsweise ein unbewusstes Unterbrechen des Schutzfeldes reduziert wird. Schließlich kann der Sensor, beispielsweise ein Lichtgitter, direkt auf einen Maschinentisch montiert werden, ohne dass spezielle Rücksicht auf die Position der Statusanzeige genommen werden muss, da diese durch das leuchtende Gehäuse gegeben wird.

Der Sensor ist Teil einer berührungslos wirkenden Schutzeinrichtung, beispielsweise eines Lichtgitters. Das Lichtgitter besteht in der Regel aus einer Sendeleiste mit darin enthaltenden Sendelichtquellen und einer Empfangsleiste mit darin enthaltenden Lichtempfangselementen, wobei erfindungsgemäß wenigstens eines der Gehäuse von Sendeleiste und Empfangsleiste leuchtend ausgebildet ist.

Besonders vorteilhaft ist es dabei, wenn das gesamte Gehäuse und nicht nur Teilbereiche leuchtfähig ausgebildet ist.

Damit der Sensor und damit das leuchtende Gehäuse von allen Seiten gleich gut erkannt werden kann, weist das Gehäuse über seine Fläche eine gleichmäßige Leuchtstärke auf.

In einer Ausführungsform der Erfindung kann das Gehäuse selbst aktiv leuchtend ausgebildet sein, so dass die Energie für die Beleuchtung des Gehäuses beispielsweise durch direkte elektrische Energiezufuhr zu dem Gehäuse realisiert sein kann. Dazu muss das Gehäuse in seiner Wandung eigene Leuchtquellen aufweisen, die durch die Energiezufuhr zum Leuchten aktiviert werden. Beispielsweise kann das Gehäuse aus einem optisch aktiven Kunststoff bestehen.

In einer weiteren Ausführungsform der Erfindung kann das Gehäuse Farbelemente enthalten, die Licht einer im Inneren des Gehäuses gelegenen Lichtquelle aufnehmen und wieder emittieren. Dann muss sichergestellt sein, dass das Licht der im Inneren des Gehäuses gelegenen Lichtquelle die Bereiche des Gehäuses erreicht, die leuchten sollen. Das Gehäuse wird dann quasi indirekt leuchten.

Vorteilhafterweise sollte das Gehäuse derart ausgebildet sein, dass es in verschiedenen Farben leuchten kann, so dass verschiedene Statusanzeigen des Sensors durch Farbänderungen dargestellt werden können.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung eines erfindungsgemäßen Sensors;
- Fig. 2: einen Teil einer Gehäusewandung;
- Fig. 3: eine Ausführungsform des erfindungsgemäßen Sensors;
- Fig. 4: ein Lichtgitter in erfindungsgemäßer Ausgestaltung.

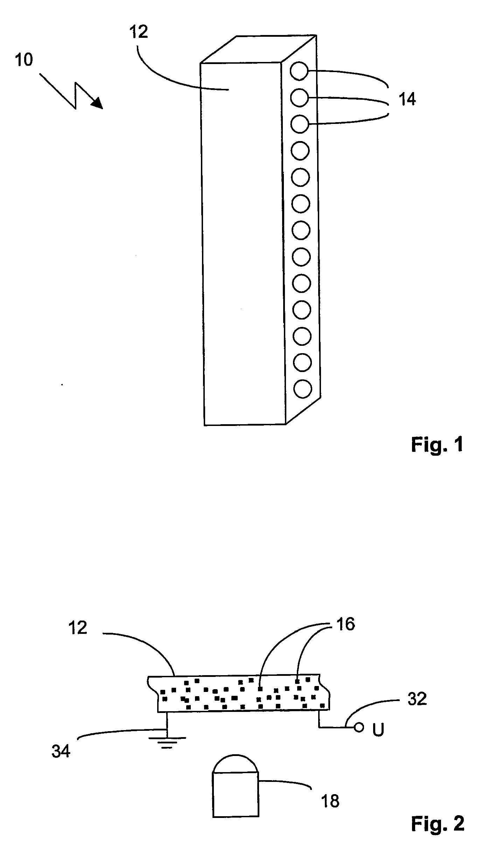

Ein erfindungsgemäßer Sensor 10 weist ein Gehäuse 12 auf, in dem Sensorelemente 14 angeordnet sind. In der Figur 1 ist der dargestellte Sensor beispielsweise eine Sendeleiste eines Lichtgitters und die Sensorelemente 14 sind die Sendelichtelemente. Erfindungsgemäß bildet das Gehäuse 12 ein optisches Anzeigeelement, so dass es leuchtfähig ausgebildet ist. Vorteilhafterweise ist das gesamte Gehäuse 12 des Sensors 10 leuchtfähig ausgebildet und weist über seine Fläche eine gleichmäßige Leuchtstärke auf.

In einer ersten Ausführungsform der Erfindung ist das Gehäuse 12 selbst aktiv leuchtend ausgebildet, was beispielsweise durch einen optisch aktiven Kunststoff realisiert sein könnte, der bei elektrischer Energiezufuhr, wie dies durch elektrische Anschlüsse 32 und 34 angedeutet ist (Fig. 2), aufleuchtet.

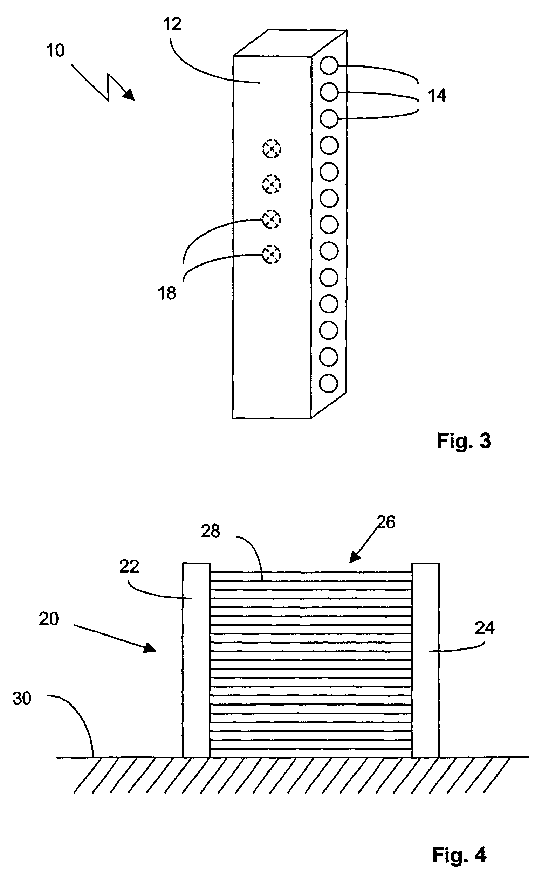

In einer weiteren Ausführungsform der Erfindung enthält das Gehäuse einzelne Farbelemente 16 (ebenfalls in Fig. 2 dargestellt), die Licht von im Inneren des Gehäuses 12 gelegenen Lichtquellen 18, von denen in Figur 3 vier dargestellt sind. Die Farbelemente 16 nehmen das Licht der Lichtquelle 18 auf und emittieren dies wieder, so dass das Gehäuse 12 leuchtet. Die Lichtquellen 18 können in unterschiedlichen Farben abstrahlen, um verschiedene Zustände des Sensors 10 anzuzeigen.

Figur 4 zeigt eine vorteilhafte Anwendung der Erfindung, bei der der Sensor als Lichtgitter 20 ausgebildet ist mit einer Sendeleiste 22 und einer Empfangsleiste 24, die entsprechende Lichtsende- und Lichtempfangselemente aufweisen und zwischen sich ein Schutzfeld 26 aufspannen, das aus einzelnen Sendelichtstrahlen 28 zusammengesetzt ist. Die Darstellung des Lichtgitters 20 in Figur 4 soll verdeutlichen, dass die erfindungsgemäß ausgebildeten Sende- und Empfangsleisten 22 und 24 keine Totzonen aufweisen, so dass das Schutzfeld 26 einen sehr geringen Abstand zu einem Maschinentisch 30 haben kann.

Das leuchtende Gehäuse dient wie eingangs erwähnt als optisches Anzeigeelement, beispielsweise um den Status des Sensors anzuzeigen. Dazu kann das Gehäuse in verschiedenen Farben aufleuchten, die beispielsweise die Zustände "Lichtweg frei", "Lichtweg unterbrochen", "Warten auf Takt" oder ähnliche Zustände durch die verschiedenen Farben anzeigen können.

## Patentansprüche

1. Berührungslos wirkende Schutzeinrichtung, insbesondere Lichtgitter, mit wenigstens einem Sensor (10), der ein Gehäuse (12) und wenigstens ein optisches Anzeigelement beispielsweise zur Statusanzeige des Sensors, aufweist, **dadurch gekennzeichnet, dass** das Gehäuse (12) das optische Anzeigeelement bildet.

2. Schutzeinrichtung nach Anspruch 1, **dadurch gekennzeichnet, dass** das gesamte Gehäuse (12) leuchtfähig ausgebildet ist.

3. Schutzeinrichtung nach einem der vorhergehenden Ansprüche, **dadurch gekennzeichnet, dass** das Gehäuse (12) über seine Fläche eine gleichmäßige Leuchtstärke aufweist.

4. Schutzeinrichtung nach einem der vorhergehenden Ansprüche, **dadurch gekennzeichnet, dass** das Gehäuse (12) selbst aktiv leuchtend ausgebildet ist.

5. Schutzeinrichtung nach einem der vorhergehenden Ansprüche, **dadurch gekennzeichnet, dass** das Gehäuse (12) aus einem optisch aktiven Kunststoff besteht.

6. Schutzeinrichtung nach einem der vorhergehenden Ansprüche, **dadurch gekennzeichnet, dass** das Gehäuse (12) Farbelemente (16) enthält, die Licht einer im Inneren des Gehäuses (12) gelegenen Lichtquelle (18) aufnehmen und wieder emittieren.

7. Schutzeinrichtung nach einem der vorhergehenden Ansprüche, **dadurch gekennzeichnet, dass** das Gehäuse (12) in verschiedenen Farben leuchten kann.

## Claims

1. Contactlessly acting protective device, in particular light array, having at least one sensor (10) which comprises a housing (12) and at least one optical display element, for example for status display of the sensor, **characterized in that** the housing (12) forms the optical display element.

2. Protective device according to Claim 1, **characterized in that** the entire housing (12) is designed to be illuminable.

3. Protective device according to one of the preceding claims, **characterized in that** the housing (12) has a uniform light intensity over its surface.

4. Protective device according to one of the preceding claims, **characterized in that** the housing (12) itself is designed to be actively luminous.

5. Protective device according to one of the preceding claims, **characterized in that** the housing (12) consists of an optically active plastic.

6. Protective device according to one of the preceding claims, **characterized in that** the housing (12) contains colour elements (12) which receive and re-emit light from a light source (18) placed inside the housing (12).

7. Protective device according to one of the preceding claims, **characterized in that** the housing (12) can illuminate in different colours.

## Revendications

1. Dispositif de protection à fonctionnement sans contact, en particulier une grille lumineuse, comprenant au moins un capteur (10) qui présente un boîtier (12) et au moins un élément d'affichage optique, par exemple pour l'affichage d'état du capteur, **caractérisé en ce que** le boîtier (12) forme l'élément d'affichage optique.

2. Dispositif de protection selon la revendication 1, **caractérisé en ce que** le boîtier complet (12) est réalisé de manière à pouvoir s'éclairer.

3. Dispositif de protection selon l'une des revendications précédentes, **caractérisé en ce que** le boîtier (12) présente une intensité lumineuse régulière sur sa surface.

4. Dispositif de protection selon l'une des revendications précédentes, **caractérisé en ce que** le boîtier (12) même est réalisé avec éclairage actif.

5. Dispositif de protection selon l'une des revendications précédentes, **caractérisé en ce que** le boîtier (12) est constitué d'une matière plastique optiquement active.

6. Dispositif de protection selon l'une des revendications précédentes, **caractérisé en ce que** le boîtier (12) contient des éléments de couleur (16) qui absorbent une lumière d'une source de lumière (18) placée à l'intérieur du boîtier (12) et qui l'émettent à nouveau.

7. Dispositif de protection selon l'une des revendications précédentes, **caractérisé en ce que** le boîtier (12) peut s'éclairer dans différentes couleurs.
